# EUROPEAN PATENT APPLICATION

(11) **EP 1 739 892 A1**
(43) Date of publication of application: **03.01.2007**
(21) Application number: 05743188.4
(22) Date of filing: 12.04.2005
(51) Int. Cl.: H04L 12/46

(54) **A METHOD AND SYSTEM FOR TRANSPORTING ETHERNET NETWORK SERVICES IN THE RPR NETWORK.**

(30) Priority: 21.04.2004 CN 200410037026
(71) Applicant: Huawei Technologies Co., Ltd., Longgang District, Shenzhen, Guangdong 518129 (CN)
(72) Inventor: QUAN, Xingyue, Shenzhen, Guangdong 518129 (CN); MA, Yunfei, Shenzhen, Guangdong 518129 (CN)
(74) Representative: Thun, Clemens
(86) International application number: PCT/CN2005/000484
(87) International publication number: WO 2005/104449

(57) **Abstract**

The present invention relates to a method and a system for transmitting Ethernet service packets on a Resilient Packet Ring (RPR) network. The present invention determines a transmission path in the RPR network for the Ethernet service when the RPR network receives the Ethernet service to be transmitted, and transmits the Ethernet service packet in the RPR network through the transmission path. With the present invention, the Ethernet private line service can be transmitted in the RPR network still through the private line, thus satisfying the requirement of the Ethernet Virtual Private Line (EVPL) service. The present invention guarantees the security of private line service during the network transmission, which completely reflects the advantages, e.g. security and reliability, of the private line service; meanwhile, after the transmission path and the bandwidth of the Ethernet private line service in the RPR network are uniquely determined, the present invention can effectively guarantee the bandwidth utilization of the transmission network.

## Description

### Field of the Technology

The present invention relates to network communication technologies, more particularly to a method and a system for transmitting Ethernet service packets in a Resilient Packet Ring (RPR) network.

### Background of the Invention

The RPR is a new technology for data transmission, which adds a loop service management layer between a physical layer device, e.g. Synchronous Digital Hierarchy (SDH), and a data device. Thus space reuse, fair access, intelligent switch, and path optimization, etc., can be implemented through the loop service management layer. The RPR technology improves traditional network frameworks based on IP over SDH, and implements the fair statistical multiplexing of the bandwidth of the ring network, and provides a relatively comprehensive protection switch mechanism. Therefore, the RPR technology can be applied in a Metropolitan Area Network (MAN) for transmission services with high bandwidth utilization efficiency.

There are multiple RPR nodes in the RPR ring network. Each RPR node has two sides; one side is connected to an Ethernet switch through an Ethernet port while the other side is connected to the RPR ring network through an RPR port. The RPR node may have multiple Ethernet ports which are connected to different Ethernet switches respectively, and the RPR node can also have multiple RPR ports which are connected to different RPR ring networks respectively.

Private-line services occupy a large part of the data services presently transmitted, therefore it is required that the RPR ring be able to transmit the Ethernet private-line services. The Ethernet private-line service is namely the point-to-point service of the Ethernet Virtual Private Line (EVPL), and the "point" can be the port or be a "port & Virtual Local Area Network (VLAN)". The EVPL is implemented by dividing service streams according to the port or the port & VLAN of one-point, and then encapsulating the data packets by Multiple Protocol Label Switching (MPLS), sending the data packets to the MPLS network and sending the data packets out from network edge of the other point after the transmission in the MPLS network, thereby the point-to-point service switch is implemented.

The RPR ring network is a network of layer 2, and the Ethernet is also of layer 2, therefore when the RPR is adopted to bear the Ethernet services, it is necessary to add an RPR header to the Ethernet packet before sending the Ethernet packet into the RPR ring network for transmission. The receiving node in the RPR ring network removes the added RPR header to obtain the Ethernet packet and then sends the Ethernet packet into the Ethernet connecting with the receiving node. In this way, the service is directly transmitted and the bearer network is transparent for the Ethernet network layer.

In order to transmit the EVPL service in the RPR, the technical scheme in the prior art is as follows:
Pre-configuring a Label Switching Path (LSP) at the RPR node, and the configuration of the LSP includes LSP configuration information of in-RPR ring and LSP configuration information of out-RPR ring. The following table 1 is the configuration information of in-RPR ring at the RPR node.

**Table 1**

| LSP Type | Ethernet in-port number | VLAN ID for entering the Ethernet port | In-RPR port number | Inserted MPLS label Tunnel/VC |
|---|---|---|---|---|
| LSP Ingress1 | Port 1 | VLAN 1 | the RPR port1 | Tunnel 1/VC 1 |

As shown in table 1, the LSP type is a unique identifier of the LSP, and the corresponding information of the LSP includes: the Ethernet in-port number, which is used to indicate through which Ethernet port the EVPL service enters the RPR node; the VLAN ID of the Ethernet port, which is optional and is used to indicate through which VLAN the EVPL service of the port & VLAN enters the Ethernet; the in-RPR port number, since there may be multiple in-RPR ports in one RPR node, the in-RPR port number is used for identifying the RPR port through which the EVPL packet enters the RPR ring network; the inserted MPLS label Tunne1/VC, which is used for label path switch in the MPLS network, wherein the Tunnel is an outer label, while the VC is an inner label. The above-mentioned items of the configuration information are all uniquely corresponding to the service, because the transmitted service is the private service.

The following table 2 is the configuration information of out-RPR ring at the RPR node.

**Table 2**

| LSP type | Out-RPR port number | Ethernet export number | VLAN ID departing from the Ethernet port | Popped MPLS label (Tunnel/VC) |
|---|---|---|---|---|
| LSP Ingress1 | the RPR port1 | Port 1 | VLAN 1 | Tunnel 1/VC |

As shown in table 2, the LSP type is a unique identifier of the LSP, and the corresponding information of the LSP includes: the out-RPR port number, which is used for identifying the RPR port through which the EVPL packet exits the RPR ring network; the Ethernet in-port number, which is used to indicate to which Ethernet port the EVPL service is transmitted from the RPR node; the VLAN ID departing from the Ethernet port, which is optional and is used to indicate to which VLAN the EVPL service of the port & VLAN are transmitted; the inserted MPLS label Tunnel/VC, which is used for label path switch in the MPLS network, wherein the Tunnel is an outer label, while the VC is an inner label. The above-mentioned items of the configuration information are all uniquely corresponding to the service, because the transmitted service is the private service.

After the EVPL packet enters the RPR node through the in-port of the Ethernet, obtaining an LSP uniquely from the LSP in-RPR ring configuration information as shown in table 1 according to the in-port number of the Ethernet, and finding the in-RPR port number and the inserted MPLS label corresponding to the LSP. Encapsulating the EVPL packet with the MPLS, adding the RPR header to the EVPL packet, transmitting the encapsulated EVPL packet according to the encapsulated MPLS label, i.e., the encapsulated EVPL packet enters the RPR ring network from the port, which is identified by the RPR port number, and broadcasting the encapsulated EVPL packet in the RPR ring network , wherein each RPR node in the RPR ring network obtains a unique LSP corresponding to the out-RPR port number from the configuration information as shown in table 2 according to the out-RPR port number of the received EVPL packet after receiving the EVPL packet, and obtains the configuration information of the LSP. i.e. the Ethernet export number, the popped MPLS label, and the VLAN ID if it exists. Removing the RPR header of the EVPL packet and performing the MPLS label switching. Transmitting the EVPL packet following the MPLS label, and sending the EVPL packet from the Ethernet port which is identified by the export number of the Ethernet to the Ethernet Switch wherein the Ethernet Switch determines whether the destination Media Access Control (MAC) address in the EVPL packet belongs to the present Ethernet, if it belongs to the present Ethernet, the Ethernet Switch receives the EVPL packet, otherwise, discards the EVPL packet.

It can be seen from the above description that, broadcast is adopted to transmit the Ethernet private line service in the RPR ring network, and the service has no fixed path in the RPR ring network. Strictly speaking, the existing scheme can not guarantee the monopolization of the "private line service" in the RPR ring network, therefore, it is impossible to statically allocate path and bandwidth for the EVPL service in the RPR ring network, which will lead to a great waste of network bandwidth and a low bandwidth utilization; on the other hand, the broadcast scheme of the EVPL service also can not guarantee the security of the service transmission, therefore, advantages, such as security, reliability, of the private line service cannot be embodied.

### Summary of the Invention

The present invention is to provide a method and a system for transmitting Ethernet service packets in a Resilient Packet Ring (RPR) network, so as to guarantee the monopolization of Ethernet Virtual Private Line (EVPL) service in the RPR ring network, improve the security of packet transmission in the RPR network, and increase the network bandwidth utilization.

### The present invention is implemented as follows:

A method for transmitting Ethernet service packets in a Resilient Packet Ring (RPR) network includes:
pre-configuring information of transmission paths in an RPR node, wherein, the Ethernet service packets are transmitted in the RPR network through the transmission paths, and determining a unique transmission path in the RPR network for an Ethernet service packet to be transmitted in the RPR network;
when a source RPR node receives an Ethernet service packet to be transmitted, it inquires about configuration information of the transmission path according to information in the Ethernet service packet, and obtains a transmission path of the Ethernet service packet in the source RPR node and a transmission path of the Ethernet service packet in the RPR ring;
the source RPR node adds the obtained transmission path to the Ethernet service packet, encapsulates the packet as an RPR packet and transmitting the RPR packet according to the obtained transmission path;
after the RPR packet arrives at a destination RPR node of the transmission path, the destination RPR node inquires about the configuration information of the RPR transmission path, obtains the transmission path of the Ethernet service packet in the destination RPR node, then de-capsulates the RPR packet to obtain the Ethernet service packet and transmits the Ethernet service packet to the Ethernet according to transmission path of the obtained Ethernet service packet in the destination RPR node.

Preferably, the information in the Ethernet service packet is an Ethernet in-port number of the packet, then the step of obtaining the transmission path of the Ethernet service packet in the source RPR node and the transmission path of the Ethernet service packet in the RPR ring according to the information in the Ethernet service packet includes:
finding the in-RPR port number and an MAC address of the destination RPR node, which are corresponding to the Ethernet in-port number, in the configuration information of the transmission path according to the Ethernet in-port number of the Ethernet service packet;
taking the transmission path, which is identified by the Ethernet in-port number and the in-RPR port number, as the transmission path of the Ethernet service packet in the source RPR node, and taking the transmission path, which is identified by the MAC address of the destination RPR node, as the transmission path of the Ethernet service packet in the RPR ring.

Preferably, the information in the Ethernet service packet is the Ethernet in-port number of the packet and a Virtual Local Area Network Identifier (VLAN ID) for entering the Ethernet, and the step of obtaining the transmission path of the Ethernet service packet in the source RPR node and the transmission path of the Ethernet service packet in the RPR ring according to the information in the Ethernet service packet includes:
finding the corresponding in-RPR port number and the MAC address of the destination RPR node in the configuration information of the transmission path according to Ethernet in-port number and the VLAN ID of the Ethernet service packet;
taking the transmission path, which is identified by the Ethernet in-port number, the VLAN ID, and the in-RPR port number, as the transmission path of Ethernet service packet in the source RPR node, and taking the transmission path, which is identified by the MAC address of the destination RPR node, as the transmission path of the Ethernet service packet in the RPR ring.

The method further includes:
the source RPR node finds a path label corresponding to the Ethernet in-port number in the configuration information of the transmission path according to the Ethernet in-port number of the Ethernet service packet; and
encapsulates the path label in the Ethernet service packet;
during the transmission, the Ethernet service packet is transmitted to the in-RPR port, which is identified by the in-RPR port number, according to the path label; and
the Ethernet service packet is transmitted to the RPR network through the RPR port.

The method further includes:
the destination RPR node finds the path label corresponding to the transmission path, through which the Ethernet service packet is transmitted in the destination RPR node, in the configuration information of the transmission path in the RPR network, and performs the label switching to the de-capsulated Ethernet service packet by the path label, and transmits the Ethernet service packet through the transmission path in the RPR node which is identified by the path label.

The step of transmitting the RPR packet in the RPR network following the obtained transmission path includes:
encapsulating the MAC address of the destination RPR node in the RPR packet and transmitting the RPR packet to the RPR network through the in-RPR port, which is identified by the in-RPR port number;
in the RPR network, each RPR node that the RPR packet passes by judges whether the MAC address of the destination RPR node in the packet matches the MAC address of itself, if the MAC address of the destination RPR node in the packet matches the MAC address of the RPR node itself, receives the packet; otherwise, forwards the packet to the next RPR node.

Preferably, the step of the destination RPR node inquiring about the configuration information of the transmission path in the RPR network and obtaining the transmission path of the Ethernet service packet in the destination RPR node includes:
inquiring about the Ethernet export number, which is corresponding to the out-RPR port number of the received RPR packet, in the configuration information of the transmission path; and
taking the transmission path identified by the Ethernet export number and the out-RPR port number as the transmission path of the Ethernet service packet in the destination RPR node.

Preferably, the step of the destination RPR node inquiring about the configuration information of the transmission path in the RPR network and obtaining the transmission path of the Ethernet service packet in the destination RPR node includes:
inquiring about the Ethernet export number and the VLAN ID, which are corresponding to the out-RPR port number of the received RPR packet, in the configuration information of the transmission path; and
taking the transmission path identified by the out-RPR port number, the Ethernet export number and the VLAN ID as the transmission path of the Ethernet service packet in the destination RPR node.

Preferably, the Ethernet service packet is an Ethernet Virtual Private Line (EVPL) service packet.

A system for transmitting Ethernet service packets in the RPR network includes:
path configuration devices, located in an in-RPR ring node and an out-RPR ring node of the Ethernet service packet, used for storing the pre-configured transmission path information of the Ethernet service packet in the RPR network;
an encapsulation device, located in the in-RPR ring node of the Ethernet service packet, used for inquiring about the transmission path information corresponding to the information carried in the Ethernet service packet from the path configuration device, and encapsulating the transmission path information in the Ethernet service packet;
RPR transmission devices, located in each node of the RPR network, used for transmitting the Ethernet service packet in the RPR network according to the encapsulated transmission path information in the Ethernet service packet;
an de-encapsulation device, located in the out-RPR ring node of the Ethernet service packet, used for de-encapsulating the encapsulated Ethernet service packet received from the RPR ring network, thereby obtaining the Ethernet service packet.

The RPR transmission device further includes a forwarding device, which is used for judging whether the MAC address of the destination RPR node in the transmission path information corresponding to the Ethernet service packet matches the MAC address of itself after receiving the encapsulated Ethernet service packet, if yes, the forwarding device transmits the packet to the de-encapsulation device of the current RPR node; otherwise, forwards the packet to the next RPR node.

It can be seen from the above-illustrated technical scheme of the present invention that, the present invention pre-configures the transmission path information in the RPR network on demand, therefore the Ethernet service packet to be transmitted in the RPR network obtains a unique transmission path in the RPR network, when the RPR network is needed to transmit the Ethernet service, the RPR node inquires about the configured transmission path information to obtain the unique transmission path of the Ethernet service packet in the RPR network, and transmits the Ethernet service packet through the transmission path. Therefore, it is possible to completely implement the transmission of the EVPL service in the RPR network by the private line and guarantee the security of the EVPL service during the transmission in the network, so as to embody the advantages, such as security, reliability, of the private line service, and the bandwidth utilization of the transmission network can be effectively guaranteed after the transmission path and the bandwidth are uniquely determined. Finally, since label switching techniques, e.g. the MPLS technology, are adopted to identify the transmission path during the transmission, operations of the transmission can be simplified, and the transmission speed is increased.

### Brief Description of the Drawings

Figure 1 is a schematic diagram illustrating the service transmission between the Ethernet and the RPR network in an embodiment of the present invention;
Figure 2 is a flowchart illustrating the method of an embodiment of the present invention;
Figure 3 is a schematic diagram illustrating the structure of the encapsulated RPR packet;
Figure 4 is a schematic diagram illustrating the system of an embodiment of the present invention.

### Detailed Description of the Invention

An embodiment of the present invention will be illustrated in detail hereinafter with reference to the accompanying drawings.

The key idea of the embodiment is: pre-configuring information of transmission path in the RPR node, wherein, the Ethernet service packet is transmitted in the RPR network through the transmission path; a source RPR node inquiring about the configuration information of the transmission path according to the information in the Ethernet service packet when receiving the Ethernet service packet to be transmitted, and obtaining the transmission path of the Ethernet service packet in the source RPR node and the transmission path of the Ethernet service packet in the RPR ring; the source RPR node adding the obtained transmission path to the Ethernet service packet, encapsulating the packet as an RPR packet and transmitting the RPR packet according to the obtained transmission path; after the RPR packet arrives at a destination RPR node of the transmission path, the destination RPR node inquiring about the configuration information of the RPR transmission path, obtaining the transmission path of the Ethernet service packet in the destination RPR node, then de-capsulating the RPR packet to obtain the Ethernet service packet and transmitting the Ethernet packet to the Ethernet according to transmission path of the obtained Ethernet service packet in the destination RPR node.

In order to simplify and speed up the transmission, the method of the present embodiment adopts the popular label switching technologies to implement the transmission of the Ethernet service packet according to the obtained transmission path; wherein, the transmission path is the Label switching Path (LSP), and is identified by the path label. The RPR node transmits the packet through the obtained transmission path according to path label. In the embodiment, the MPLS technique is taken as an example.

In the present embodiment, the Ethernet service packet is encapsulated by the MPLS before being transmitted on the RPR ring, and then a label switching path is established between the Ethernet and the RPR ring network, so that the EVPL service can be transmitted in the RPR ring network through the label switching path.

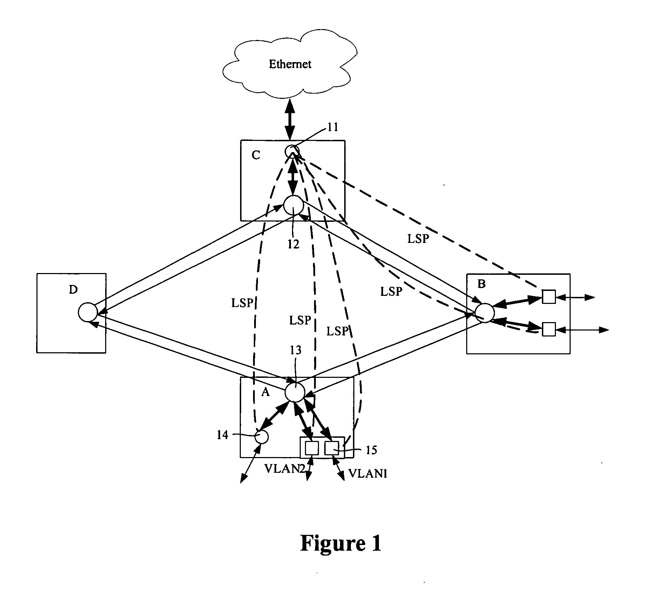

Figure 1 is a schematic diagram illustrating the service transmission between the Ethernet and the RPR network of the present embodiment. As shown in figure 1, the LSP of the in-RPR ring Ethernet service needs to determine not only the Ethernet in-port 11, RPR export 12 and the MPLS label at the RPR node C of the RPR ring, but also the destination RPR node of the service, i.e. the MAC address of node A, therefore determining the LSP needed when transmitting the Ethernet service in the RPR ring network according to the MAC address of the destination RPR node; after the Ethernet service arrives at the destination RPR node, the LSP of out-RPR ring only needs to confirm the RPR in-port 13, the Ethernet export 14 and the MPLS label, as to the EVPL service with port & VLAN, the VLAN ID 15 is further to be determined.

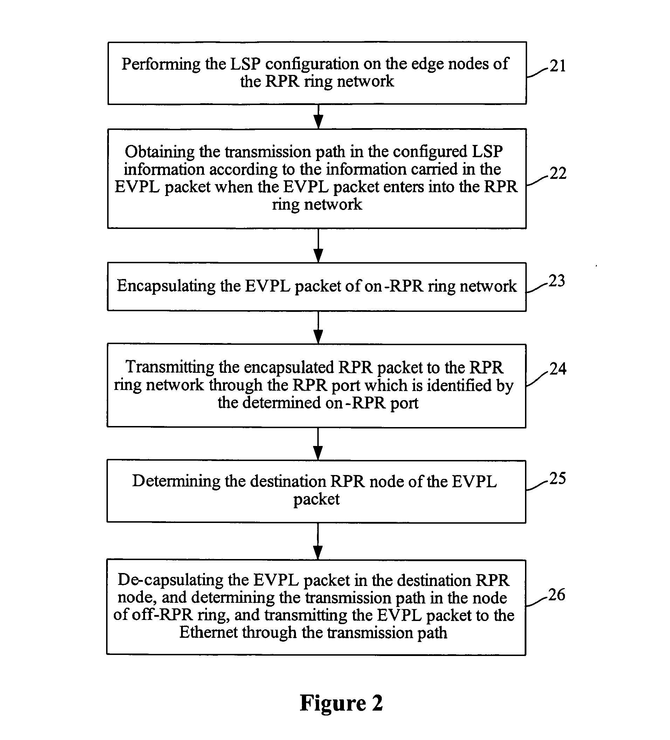

Figure 2 is a flowchart illustrating the method of the present embodiment. With reference to figure 2, the method includes the following steps:
Step 21: pre-configuring the transmission path of the Ethernet service at edge nodes of the RPR ring network, so that when the EVPL service enters the RPR ring network, a unique transmission path can be determined in the RPR ring network for the EVPL service, wherein the transmission path is the LSP, so it is necessary to add a corresponding MPLS label to the EVPL packet, therefore the EVPL service can be transmitted in the RPR ring network through the unique transmission path determined by the MPLS protocol.

During the transmission of the EVPL packet, the source RPR node and the destination RPR node are the edge nodes, while other RPR nodes are non-edge RPR nodes.

The LSP configuration information includes: the LSP configuration information of in-RPR ring and the LSP configuration information of out-RPR ring. The following table 3 is the configuration information of in-RPR ring in the RPR node.

**Table 3**

| LSP Type | Ethernet in-port number | VLAN ID for entering the Ethernet port | In-RPR port number | MAC address of the destination RPR node | Inserted MPLS label Tunnel/VC |
|---|---|---|---|---|---|
| LSP Ingress | Port 1 | VLAN 1 | the RPR port1 | MAC A | Tunnel 1/VC 1 |

As shown in table 3, the LSP type is a unique identifier of the LSP, and the corresponding information of the LSP includes: the Ethernet in-port number, which is used to indicate through which Ethernet port the EVPL service enters the RPR node; the VLAN ID for entering the Ethernet port, which is optional and is used to indicate through which VLAN the EVPL service with port & VLAN enters the Ethernet; the in-RPR port number, used for identifying the RPR port through which the RPR node connects with the RPR ring network; the MAC address of the destination RPR node, used for identifying the MAC address of the destination RPR node of the current hop; the inserted MPLS label Tunnel/VC, used for label path switch in the MPLS network, wherein the Tunnel is an outer label, while the VC is an inner label. The above-mentioned items of the configuration information are all uniquely corresponding to the service, because the transmitted service is the private service. The Ethernet in-port number and the VLAN ID for entering the Ethernet port are both carried in the EVPL packet.

With the configuration information in the above table 3, the unique transmission path can be determined for the EVPL service that enters into the RPR ring, and the corresponding MPLS encapsulation operation can be performed; meanwhile, an RPR protocol module can obtain the MAC address of the destination RPR node by inquiring about the configuration table, and then transmit the service to the destination RPR node through an RPR protocol layer according to the MAC address of the destination RPR node.

The following table 4 is the configuration information of out-RPR ring at the RPR node.

**Table 4**

| LSP type | Out-RPR port number | Ethernet export number | VLAN ID departing from the Ethernet port | Popped MPLS label (Tunnel/VC) |
|---|---|---|---|---|
| LSP Ingress1 | the RPR port1 | Port 1 | VLAN 1 | Tunnel 1/VC 1 |

As shown in table 4, the LSP configuration information of out-RPR ring is the same as that in the prior art shown in figure 2, which is not to be illustrated herein.

With the information in the above table 4, the EVPL service of out-RPR ring, which is encapsulated by the RPR, can be de-encapsulated by the RPR, and then be transmitted in the Ethernet by inquiring about the LSP configuration information.

The RPR node stores both of the two LSP configurations in its LSP configuration table and each LSP configuration has a unique ID for being conveniently inquired.

Step 22: after the LSP configuration in step 21, when the EVPL packet enters into the RPR node of in-RPR ring through the Ethernet in-port, the RPR node finds out the LSP configuration corresponding to information in the EVPL packet according to the information in the EVPL packet from the LSP configuration information in table 3, and obtains the transmission path of the EVPL packet in the source RPR node as well as that in the RPR ring. The information carried in the EVPL packet is the Ethernet in-port number, or the Ethernet in-port number and the VLAN ID for entering the Ethernet port. If the carried information is the Ethernet in-port number, the found LSP configuration information includes: in-RPR port number, the MAC address of the destination RPR node and Inserted MPLS label Tunnel/VC; hereby, taking the transmission path, which is identified by the Ethernet in-port number and the in-RPR port number, as the transmission path of EVPL packet in the source RPR node, and taking the transmission path, which is identified by the MAC address of the destination RPR node, as the transmission path of the EVPL packet in the RPR ring. If the carried information is the VLAN ID for entering the Ethernet port, then it is further needed to judge and determine the corresponding LSP configuration information, including the in-RPR port number, the MAC address of the destination RPR node, and the Inserted MPLS label Tunnel/VC, according to the VLAN ID information; hereby, taking the transmission path, which is identified by the Ethernet in-port number, the VLAN ID for entering the Ethernet port, and the in-RPR port number, as the transmission path of the EVPL packet in the source RPR node, and taking the transmission path, which is identified by the MAC address of the destination RPR node, as the transmission path of the EVPL packet in the RPR ring.

It is well-known by those skilled in the art that, as to the MPLS technique, the LSP is determined after obtaining the MPLS label, therefore the MPLS label can be used to encapsulate the EVPL packet.

Corresponding bandwidth resources can be allocated for the unique LSP, therefore satisfying the bandwidth requirement of the EVPL service.

Step 23: encapsulate the EVPL packet of in-RPR ring by the LSP configuration information obtained in the above step 22 to obtain the RPR packet.

Firstly, encapsulate the EVPL packet by the MPLS, i.e. encapsulating the inserted MPLS label, which is determined by the LSP configuration information, in a corresponding field of the EVPL packet, and the EVPL packet can be transmitted according to the MPLS label.

Secondly, encapsulate the RPR header in the EVPL packet, so that EVPL packet can be identified by the nodes in the RPR ring network, and can be transmitted in the RPR ring network based on the RPR protocol.

Finally, add the MAC address of the source RPR node, i.e. the MAC address of the current RPR node, and the MAC address of the destination RPR node to the EVPL packet after the above-mentioned encapsulation by the MPLS and the RPR.

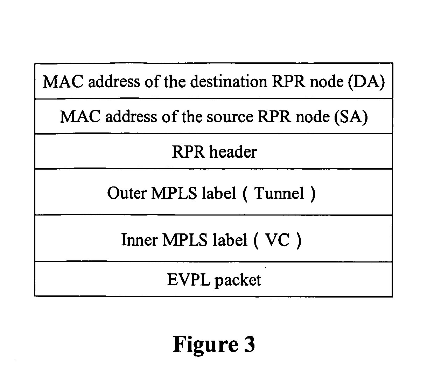

Figure 3 shows the structure of the encapsulated RPR packet. As shown in figure 3: the bottom layer in the RPR packet is the EVPL packet and the second bottom layer is the MPLS label, which are the inner MPLS label and the outer MPLS label respectively, the next layer is the RPR header, and the upper two layers are the MAC addresses of the source RPR node and the destination RPR node respectively.

Step 24: the source RPR node transmits the encapsulated RPR packet to the RPR ring network through the RPR port, which is identified by the in-RPR port number obtained in step 22.

In the present embodiment, since the MPLS label is adopted to identify the transmission path, during the transmission, the source the RPR node transmits the EVPL packet to the in-RPR port, which is identified by the in-RPR port number, according to the path label, and the EVPL packet enters into the RPR network through the in-RPR port.

During the transmission, the source RPR node and the destination RPR node are the edge RPR nodes, while the other RPR nodes are non-edge RPR nodes; at each non-edge RPR node, the packet is transmitted in the RPR ring according to the RPR protocol without performing the MPLS label switching, thus completing the service transmission in the RPR ring network.

Step 25: in the RPR ring network, each RPR node that the RPR packet passes by judges whether the MAC address of the destination RPR node in the packet is the MAC address of the current node, if yes, the current node is determined as the out-RPR ring node of the packet and receives the packet before executing step 26; otherwise, forwards the packet to the next RPR node until the RPR packet arrives at the destination RPR node, and then executing step 26.

Step 26: the out-RPR ring node of the RPR packet, i.e. the destination RPR node, de-encapsulating the RPR packet, removes the RPR header of the RPR packet, reduces the RPR packet as the EVPL packet that is encapsulated with the MPLS label, and searches the corresponding Ethernet export number in the LSP configuration information shown in table 4 according to the out-RPR port number of the received RPR packet, takes the transmission path, which is identified by the out-RPR port number and the Ethernet export number, as the transmission path of the EVPL packet in the destination RPR node, inquiries about the popped MPLS label which identifies the transmission path, performs the label switching upon the de-encapsulated EVPL packet by the popped MPLS label, and transmits the EVPL·packet according to the transmission path identified by the MPLS label, i.e., transmits the EVPL packet to the Ethernet export identified by the Ethernet export number according to the MPLS label, such that the EVPL packet enters into the Ethernet through the Ethernet export.

As to the EVPL service with port & VLAN, the destination RPR node further obtains the VLAN ID departing from the Ethernet export according to the out-RPR port number of the received RPR packet, takes the transmission path, which is identified by the out-RPR port number and the Ethernet export number, as the transmission path of the EVPL packet in the destination RPR node. The destination RPR node transmits the EVPL packet according to the MPLS label, and transmits the EVPL packet to the VLAN through the Ethernet export identified by the VLAN ID.

The above embodiment discloses the method of identifying the transmission path by the label switching protocol and transmitting the Ethernet service packet, wherein the label switching protocol can be replaced by other methods to transmit the Ethernet packet according to the determined transmission path. For instance, the source RPR node adopts a Virtual Metropolitan Area Network (VMAN) to encapsulate the in-RPR port number into the Ethernet packet, therefore the corresponding in-RPR port can be found according to the in-RPR port number encapsulated in the Ethernet packet, and then the Ethernet packet can be transmitted to the RPR ring. The destination RPR node adopts the VMAN to encapsulate the determined Ethernet export number into the Ethernet packet, so the corresponding Ethernet export can be found according to Ethernet export number encapsulated in the Ethernet packet and then the Ethernet packet is transmitted to the Ethernet.

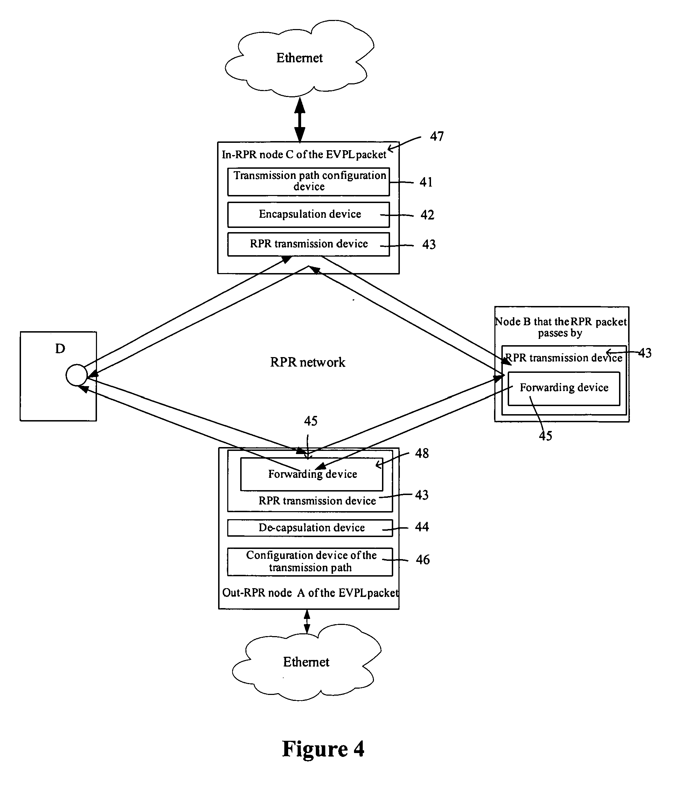

The present embodiment also provides a system for transmitting the Ethernet service in the RPR network, as shown in figure 4, the system includes:
the path configuration devices 41: located in the in-RPR ring node 47 and the out-RPR ring node 48 of the Ethernet service packet, and used for storing the pre-configured transmission path information of the EVPL service packet in the RPR network shown as table 3. Preferably, the transmission path information is the LSP information.
the encapsulation device 42: located in the in-RPR ring node 47 of the Ethernet service packet, and used for inquiring about the transmission path information, including the MAC address of the destination RPR node, corresponding to the information carried in the EVPL packet from the path configuration device, and encapsulating the transmission path information in the Ethernet service packet. For instance, encapsulating the EVPL packet based on the label switching protocol, and encapsulating the RPR header, wherein, the label switching protocol includes the MPLS protocol, other label switching protocols can also be adopted in the present embodiment.

The RPR transmission devices 43: located in the nodes of the RPR network, and used for transmitting the EVPL packet in the RPR network according to the encapsulated transmission path information in the Ethernet service packet. Specifically, the RPR transmission device in the source RPR node transmits the EVPL packet, which is processed by the encapsulating device 42, in the source RPR node and the RPR ring network according to the encapsulated transmission path; the RPR transmission devices of the intermediate RPR nodes forward the EVPL packet; the RPR transmission device of the destination RPR node inquiries about the path configuration device of the destination RPR node to obtain transmission path of the EVPL packet at this node, and then transmits the EVPL packet according to the transmission path in the current node.

The de-encapsulation device 44: located in the out-RPR ring node 48 of the EVPL packet, used for de-encapsulating the encapsulated EVPL packet received from the RPR ring network, thereby obtaining the EVPL packet and transmitting the EVPL packet to the transmission device for transmission.

The RPR transmission device further includes the forwarding device 45, which is used for judging whether the MAC address of the destination RPR node in the transmission path information corresponding to the Ethernet service packet matches the MAC address of itself after receiving the encapsulated Ethernet service packet, if yes, the forwarding device transmits the packet to the de-encapsulation device of the current RPR node; otherwise, forwards the packet to the next RPR node.

In the above figure 4, the system of the present embodiment is illustrated with reference to the transmission of one EVPL packet. The path configuration device 41, the encapsulation device 42, the RPR transmission device 43 and the de-encapsulation device 44 can also be located in each RPR node, which requires for the Ethernet private line service, in the RPR ring network.

The Ethernet service packet in the above-mentioned embodiments is not confined to the EVPL packet, other Ethernet service packets are also applicable in the method and system of the embodiment of present invention.

To sum up, the above illustrated embodiments are just the preferable embodiments of the present invention, and are not used for confining the protection scope of the present invention. It will be understood by those skilled in the art that, any modification, equivalent substitute and improvement within the spirit of the present invention are covered in the protection scope of the present invention. The protection scope of the present invention is defined in terms of the claims hereinafter.

## Claims

1. A method for transmitting Ethernet service packets in a Resilient Packet Ring (RPR) network, comprising:
pre-configuring information of transmission paths in an RPR node, through which, the Ethernet service packets are transmitted in the RPR network; and
determining a unique transmission path in the RPR network for an Ethernet service packet to be transmitted in the RPR network;
when a source RPR node receives an Ethernet service packet to be transmitted, it inquiring about configuration information of the transmission path according to information in the Ethernet service packet, and obtaining the transmission path of the Ethernet service packet in the source RPR node and the transmission path of the Ethernet service packet in the RPR ring;
the source RPR node adding the obtained transmission path to the Ethernet service packet, encapsulating the Ethernet service packet as an RPR packet and transmitting the RPR packet according to the obtained transmission path;
after the RPR packet arrives at a destination RPR node of the transmission path, the destination RPR node inquiring about the configuration information of the RPR transmission path, obtaining the transmission path of the Ethernet service packet in the destination RPR node, then de-capsulating the RPR packet to obtain the Ethernet service packet and transmitting the Ethernet service packet to the Ethernet according to transmission path of the obtained Ethernet service packet in the destination RPR node.

2. The method according to claim 1, wherein, the information in the Ethernet service packet is an Ethernet in-port number of the packet, and the step of obtaining the transmission path of the Ethernet service packet in the source RPR node and the transmission path of the Ethernet service packet in the RPR ring according to the information in the Ethernet service packet comprises:
finding the in-RPR port number and an MAC address of the destination RPR node, which are corresponding to the Ethernet in-port number, in the configuration information of the transmission path according to the Ethernet in-port number of the Ethernet service packet;
taking the transmission path, which is identified by the Ethernet in-port number and the in-RPR port number, as the transmission path of Ethernet service packet in the source RPR node; and
taking the transmission path, which is identified by the MAC address of the destination RPR node, as the transmission path of the Ethernet service packet in the RPR ring.

3. The method according to claim 1, wherein, the information in the Ethernet service packet is the Ethernet in-port number of the packet and a Virtual Local Area Network Identifier (VLAN ID) for entering the Ethernet, and the step of obtaining the transmission path of the Ethernet service packet in the source RPR node and the transmission path of the Ethernet service packet in the RPR ring according to the information in the Ethernet service packet comprises:
finding the corresponding in-RPR port number and the MAC address of the destination RPR node in the configuration information of the transmission path according to Ethernet in-port number and the VLAN ID of the Ethernet service packet;
taking the transmission path, which is identified by the Ethernet in-port number, the VLAN ID, and the in-RPR port number, as the transmission path of Ethernet service packet in the source RPR node; and
taking the transmission path, which is identified by the MAC address of the destination RPR node, as the transmission path of the Ethernet service packet in the RPR ring.

4. The method according to claim 2 or claim 3, further comprising:
the source RPR node finding a path label corresponding to the Ethernet in-port number in the configuration information of the transmission path according to the Ethernet in-port number of the Ethernet service packet; and
encapsulating the path label in the Ethernet service packet during the transmission;
transmitting the Ethernet service packet to the in-RPR port, which is identified by the in-RPR port number, according to the path label; and
transmitting the Ethernet service packet to the RPR network through the RPR port.

5. The method according to claim 4, further comprising:
the destination RPR node finding the path label corresponding to the transmission path, through which the Ethernet service packet is transmitted in the destination RPR node, in the configuration information of the transmission path in the RPR network, and performing the label switching to the de-capsulated Ethernet service packet by the path label, and transmitting the Ethernet service packet through the transmission path in the RPR node which is identified by the path label.

6. The method according to claim 2 or claim 3, wherein, the step of transmitting the RPR packet in the RPR network following the obtained transmission path comprises:
encapsulating the MAC address of the destination RPR node in the RPR packet and transmitting the RPR packet to the RPR network through the in-RPR port, which is identified by the in-RPR port number; and
in the RPR network, each RPR node that the RPR packet passes by judging whether the MAC address of the destination RPR node in the RPR packet matches the MAC address of itself, if the MAC address of the destination RPR node matches the MAC address of itself, receiving the RPR packet; otherwise, forwarding the packet to the next RPR node.

7. The method according to claim 1,wherein, the step of the destination RPR node inquiring about the configuration information of the transmission path in the RPR network and obtaining the transmission path of the Ethernet service packet in the destination RPR node comprises:
inquiring about the Ethernet export number, which is corresponding to the out-RPR port number of the received RPR packet, in the configuration information of the transmission path; and
taking the transmission path identified by the Ethernet export number and the out-RPR port number as the transmission path of the Ethernet service packet in the destination RPR node.

8. The method according to claim 1, wherein, the step of the destination RPR node inquiring about the configuration information of the transmission path in the RPR network and obtaining the transmission path of the Ethernet service packet in the destination RPR node comprises:
inquiring about the Ethernet export number and the VLAN ID, which are corresponding to the out-RPR port number of the received RPR packet, in the configuration information of the transmission path; and
taking the transmission path identified by the out-RPR port number, the Ethernet export number and the VLAN ID as the transmission path of the Ethernet service packet in the destination RPR node.

9. The method according to claim 1, wherein, the Ethernet service packet is an Ethernet Virtual Private Line (EVPL) service packet.

10. A system for transmitting Ethernet service packets in a Resilient Packet Ring (RPR) network, comprising:
path configuration devices, located in an in-RPR ring node and an out-RPR ring node of an Ethernet service packet, used for storing pre-configured transmission path information of the Ethernet service packet in the RPR network;
an encapsulation device, located in the in-RPR ring node of the Ethernet service packet, used for inquiring about the transmission path information corresponding to information carried in an Ethernet service packet from the path configuration device, and encapsulating the transmission path information in the Ethernet service packet;
RPR transmission devices, located in each node of the RPR network, used for transmitting the Ethernet service packet in the RPR network according to the encapsulated transmission path information in the Ethernet service packet;
an de-encapsulation device, located in the out-RPR ring node of the Ethernet service packet, used for de-encapsulating the encapsulated Ethernet service packet received from the RPR ring network, thereby obtaining the Ethernet service packet.

11. The system according to claim 10, wherein, the RPR transmission device comprises a forwarding device, which is used for judging whether the Media Access Control (MAC) address of the destination RPR node in the transmission path information corresponding to the Ethernet service packet matches the MAC address of the RPR node itself after receiving the encapsulated Ethernet service packet, if yes, the forwarding device transmits the packet to the de-encapsulation device of the current RPR node; otherwise, forwarding the packet to the next RPR node.
